# EUROPEAN PATENT SPECIFICATION

(11) **EP 3 669 484 B1**
(45) Date of publication and mention of the grant of the patent: **15.06.2022**
(21) Application number: 18769878.2
(22) Date of filing: 16.08.2018
(51) Int. Cl.: H04L 5/00, H04B 7/00

(54) **WIRELESS COMMUNICATION METHOD, USER EQUIPMENT, AND BASE STATION**
DRAHTLOSKOMMUNIKATIONSVERFAHREN, BENUTZERGERÄT UND BASISSTATION
PROCÉDÉ DE COMMUNICATION SANS FIL, ÉQUIPEMENT UTILISATEUR ET STATION DE BASE

(30) Priority: 18.08.2017 US 201762547464 P
(43) Date of publication of application: 24.06.2020
(73) Proprietor: NTT DOCOMO, INC., Chiyoda-ku Tokyo 100-6150 (JP)
(72) Inventor: KAKISHIMA, Yuichi, Chiyoda-ku 100-6150 (JP); TAKEDA, Kazuki, Chiyoda-ku 100-6150 (JP); NA, Chongning, Chiyoda-ku 100-6150 (JP); NAGATA, Satoshi, Chiyoda-ku 100-6150 (JP)
(74) Representative: Hoffmann Eitle
(86) International application number: PCT/US2018/046797
(87) International publication number: WO 2019/036531

(56) References cited:
- EP-A1- 2 606 670
- EP-B1- 2 606 670
- WO-A1-2014/110808
- INTERDIGITAL ET AL: "On Beam Management for DL Control and Data Channels", 3GPP DRAFT; R1-1710924 BEAM MANAGEMENT FOR CONTROL AND DATA CHANNELS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; F , vol. RAN WG1, no. Qingdao, P.R. China; 20170627 - 20170630 26 June 2017 (2017-06-26), XP051300125, Retrieved from the Internet: URL:http://www.3gpp.org/ftp/Meetings_3GPP_ SYNC/RAN1/Docs/ [retrieved on 2017-06-26]

## Description

### Technical Field

One or more embodiments disclosed herein relate to a wireless communication method in a wireless communication system that includes a base station (BS) including multiple antenna ports (APs) and a user equipment (UE).

### Background

A New Radio (NR; fifth generation (5G) radio access technology) system operates in higher frequency bands (e.g., Millimeter Wave (mmWave)). In the NR system using the mmWave, transmission and reception beam selection greatly affects system characteristics.

In the NR system, transmission and reception beams are determined using beam management and channel state information (CSI) acquisition. Typically, a long-term (periodic) and wideband beam may be determined in the beam management, and then, a short-term (triggered) and narrow band beam may be determined in the CSI acquisition scheme.

In the beam management, a Downlink (DL) Transmission (Tx) beam of Transmission/Reception Point (TRP) (e.g., gNodeB (gNB)) and a DL Reception (Rx) beam of a user equipment (UE) may be determined. Furthermore, in the beam management, an Uplink (UL) Rx beam in the TRP and a UL Tx beam of the UE may be determined.

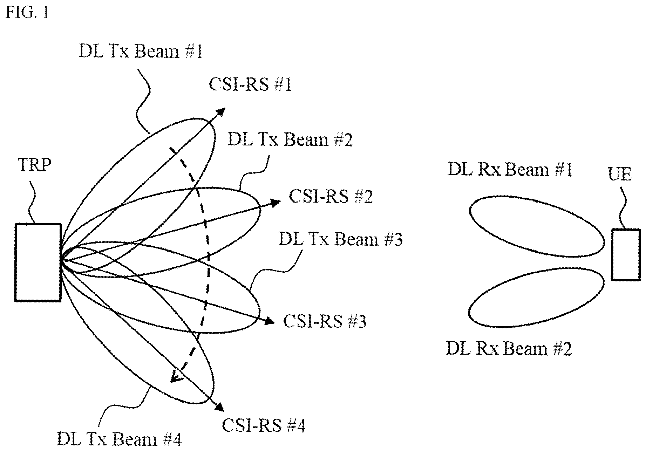

Fig. 1 is a diagram showing a conventional beam management scheme where Channel State Information-Reference Signals (CSI-RSs) are transmitted using 1-port (Antenna Port (AP)). In other words, Fig. 1 shows an example of the beam management using each CSI-RS resource (beam) with 1-port for one Orthogonal Frequency Division Multiplexing (OFDM) symbol. As shown in Fig. 1, CSI-RSs #1-4 are transmitted using DL Tx Beams #1-4, respectively, and each of the CSI-RSs #1-4 is transmitted from 1 AP. In Fig. 1, the DL Tx beam of the TRP and the DL Rx beam of the UE can be selected in the beam management.

In the 3rd Generation Partnership Project (3GPP) Radio Access Network (RAN) Working Group (WG), it is agreed that each CSI-RS resource (beam) with 1-port and 2-port for one OFDM symbol can be used for beam management in the NR system. However, in the 3GPP RAN WG, how beam management using each CSI-RS resource (beam) with two or more ports (APs) is performed has not been determined.

### Citation List

### Non-Patent References

[Non-Patent Reference 1] 3GPP, TS 36.211 V 14.3.0
[Non-Patent Reference 2] 3GPP, TS 36.213 V14.3.0

INTERDIGITAL ET AL: "On Beam Management for DL Control and Data Channels", 3GPP DRAFT; R1-1710924 relates to NR-PDCCH beam monitoring behaviour and beam association between control and data channel.

### Patent References

WO 2014/110808 A1 relates to communication technology, particularly to a method for acquiring channel characteristics.

EP 2606670 A1 relates to procedures for point association as well as measurement and feedback to enable point association for CoMP.

### Summary

One or more embodiments of the present invention relate to a wireless communication method that includes transmitting, from a base station (BS) that comprises multiple antenna ports (APs), multiple first Channel State Information Reference Signals (CSI-RSs) on the multiple APs using a first CSI-RS resource, receiving, with a user equipment (UE), the multiple first CSI-RSs, and calculating, with the UE, a Reference Signal Received Power (RSRP) value on the first CSI-RS resource.

One or more embodiments of the present invention relate to a UE that includes a receiver that receives, from a BS that comprises multiple APs, multiple first CSI-RSs transmitted on the multiple APs using a first CSI-RS resource, and a processor that calculates an RSRP value on the first CSI-RS resource.

One or more embodiments of the present invention relate to a BS that includes multiple APs, a transmitter that transmits, to a UE, multiple first CSI-RSs on the multiple APs using a first CSI-RS resource, and a receiver that receives, from the UE, an RSRP value calculated on the first CSI-RS resource.

One or more embodiments of the present invention can provide a method to perform beam management using each CSI-RS resource (beam) with multiple APs.

Other embodiments and advantages of the present invention will be recognized from the description and figures.

### Brief Description of the Drawings

Fig. 1 is a diagram showing a conventional beam management using each CSI-RS resource (beam) with 1 AP.
Fig. 2 is a diagram showing a configuration of a wireless communication system according to one or more embodiments of the present invention.
Figs. 3A and 3B are diagrams showing antenna models of the gNB for 30 GHz and 70 GHz, respectively, according to one or more embodiments of the present invention.
Figs. 4A and 4B are diagrams showing antenna models of the UE for 30 GHz and 70 GHz, respectively, according to one or more embodiments of the present invention.
Fig. 5 is a diagram showing beam management operations using each CSI-RS resource (beam) with multiple APs according to one or more embodiments of the present invention.
Fig. 6 is a flowchart diagram showing beam management and CSI acquisition schemes according to one or more embodiments of a first example of the present invention.
Fig. 7 is a diagram showing an example of RSRP calculation and CRI determination according to one or more embodiments of the first example of the present invention.
Fig. 8 is a sequence diagram showing an operation example of beam management according to one or more embodiments of the first example of the present invention.
Fig. 9 is a diagram showing an example of RSRP calculation and CRI determination according to one or more embodiments of a first modified example of the present invention.
Fig. 10 is a diagram showing an example of RSRP calculation and CRI determination according to one or more embodiments of a first modified example of the present invention.
Fig. 11 is a flowchart diagram showing beam management and CSI acquisition schemes according to one or more embodiments of a second example of the present invention.
Fig. 12 is a sequence diagram showing an operation example of beam management according to one or more embodiments of the second example of the present invention.
Fig. 13 is a diagram showing an example of AP determination according to one or more embodiments of the first example of the present invention.
Fig. 14 is a flowchart diagram showing beam management and CSI acquisition schemes according to one or more embodiments of a fourth example of the present invention.
Fig. 15 is a diagram showing a schematic configuration of the gNB according to one or more embodiments of the present invention.
Fig. 16 is a diagram showing a schematic configuration of the UE according to one or more embodiments of the present invention.

### Detailed Description

Embodiments of the present invention will be described in detail below, with reference to the drawings. In embodiments of the invention, numerous specific details are set forth in order to provide a more thorough understanding of the invention. However, it will be apparent to one of ordinary skill in the art that the invention may be practiced without these specific details. In other instances, well-known features have not been described in detail to avoid obscuring the invention.

In one more embodiments of the present invention, a beam may be referred to as a resource. For example, the DL Tx beam used for the CSI-RS transmission may be a CSI-RS resource. For example, a beam index (BI) that identifies each beam may be referred to as a Resource Index such as a CSI-RS Resource Indicator (CRI) that identifies each CSI-RS resource.

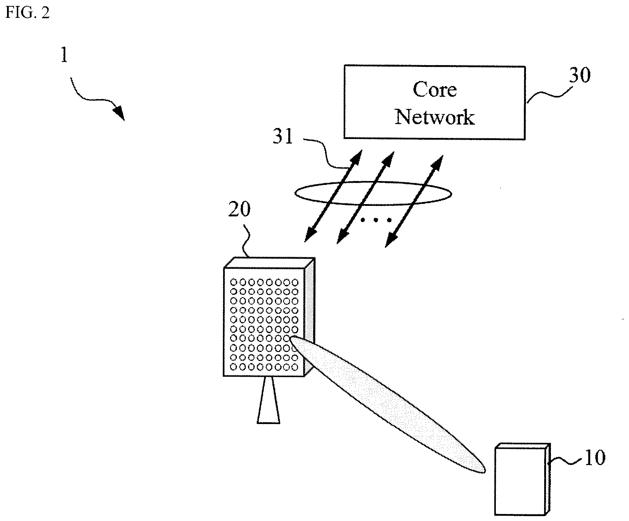

Fig. 2 is a wireless communications system 1 according to one or more embodiments of the present invention. The wireless communication system 1 includes a user equipment (UE) 10, a gNodeB (gNB) 20, and a core network 30. The wireless communication system 1 may be a New Radio (NR) system. The wireless communication system 1 is not limited to the specific configurations described herein and may be any type of wireless communication system such as an LTE/LTE-Advanced (LTE-A) system.

The gNB 20 may communicate UL and DL signals with the UE 10 in a cell of the gNB 20. The DL and UL signals may include control information and user data. The gNB 20 may communicate DL and UL signals with the core network 30 through backhaul links 31. The gNB 20 may be an example of a base station (BS). The gNB 20 may be referred to as a TRP. For example, when the wireless communications system 1 is a LTE system, the BS may be an evolved NodeB (eNB).

The gNB 20 includes antennas, a communication interface to communicate with an adjacent gNB 20 (for example, X2 interface), a communication interface to communicate with the core network 30 (for example, S1 interface), and a CPU (Central Processing Unit) such as a processor or a circuit to process transmitted and received signals with the UE 10. Operations of the gNB 20 may be implemented by the processor processing or executing data and programs stored in a memory. However, the gNB 20 is not limited to the hardware configuration set forth above and may be realized by other appropriate hardware configurations as understood by those of ordinary skill in the art. Numerous gNBs 20 may be disposed so as to cover a broader service area of the wireless communication system 1.

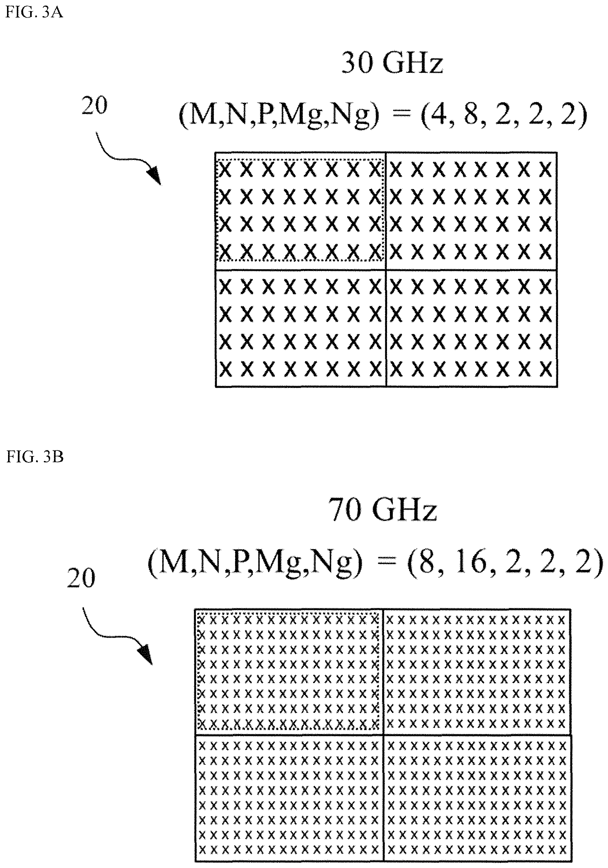

For example, the antenna model of the gNB 20 may be configured by a tuple (M, N, P, Mg, Ng) as shown in Figs. 3A and 3B. Figs. 3A and 3B show antenna models of the gNB 20 for 30 GHz and 70 GHz, respectively. "M" is the number of antenna elements in a column and "N" is the number of antenna elements in a row. "P" is the number of antenna polarizations. "Mg" is the number of panels in a column and "Ng" is the number of panels in a row.

The UE 10 may communicate DL and UL signals that include control information and user data with the gNB 20 using Multi Input Multi Output (MIMO) technology. The UE 10 may be a mobile station, a smartphone, a cellular phone, a tablet, a mobile router, or information processing apparatus having a radio communication function such as a wearable device. The wireless communication system 1 may include one or more UEs 10.

The UE 10 includes a CPU such as a processor, a RAM (Random Access Memory), a flash memory, and a radio communication device to transmit/receive radio signals to/from the gNB 20 and the UE 10. For example, operations of the UE 10 described below may be implemented by the CPU processing or executing data and programs stored in a memory. However, the UE 10 is not limited to the hardware configuration set forth above and may be configured with, e.g., a circuit to achieve the processing described below.

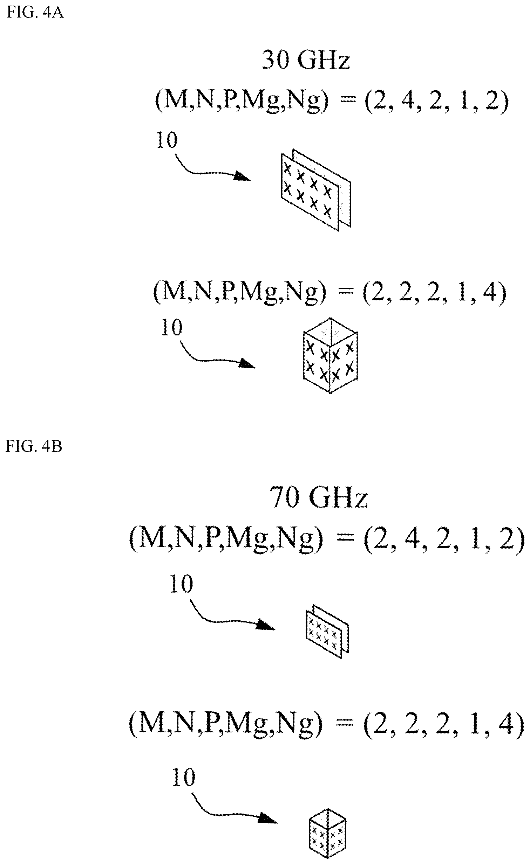

For example, the antenna model of the UE may be configured by a tuple (M, N, P, Mg, Ng) as shown in Figs. 4A and 4B. Figs. 4A and 4B show antenna models of the UE 10 for 30 GHz and 70 GHz, respectively.

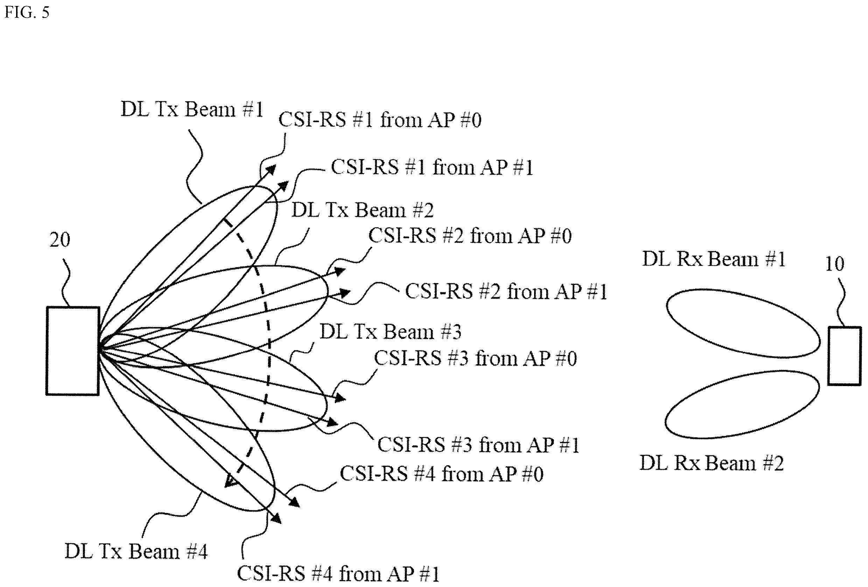

In beam management according to one or more embodiments of the present invention, each CSI-RS resource (beam) with multiple APs may be used for the CSI-RS transmission. For example, as shown in Fig. 5, the CSI-RSs #1 may be transmitted from APs #0 and #1 using a DL Tx beam #1. For example, the gNB 20 may transmit the beamformed CSI-RSs #1-4 using beam sweeping.

In an example of Fig. 5, the number of APs is two (APs #0 and #1). However, the number of APs is not limited to two. In one more embodiments of the present invention, the number of APs used for the CSI-RS transmission may be two or more.

### (First Example)

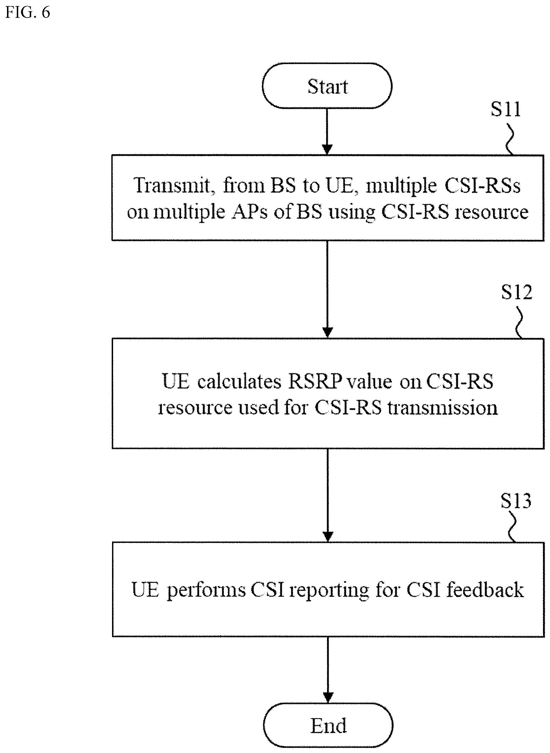

Fig. 6 is a flowchart diagram showing beam management and CSI acquisition schemes according to one or more embodiments of a first example of the present invention. The beam management and CSI acquisition may not be a single consecutive procedure.

As shown in Fig. 6, at step S11, the gNB 20 may transmit multiple CSI-RSs on multiple APs of the gNB 20 using a CSI-RS resource. For example, when the gNB 20 has two APs (APs #0 and #1) and uses four CSI-RS resources (CRIs #1-#4) in a beam sweeping operation, the gNB 20 transmits first CSI-RSs on APs #0 and #1 using CRI #1. Then, the gNB 20 transmits second CSI-RSs on APs #0 and #1 using CRI #2. The gNB 20 transmits third CSI-RSs on APs #0 and #1 using CRI #3. The gNB 20 transmits fourth CSI-RSs on APs #0 and # 1 using CRI #4.

At step S12, the UE 10 may calculate an RSRP value on the CSI-RS resource used for the CSI-RSs transmission. The RSRP is an example of metric. The metric may be Reference Signal Received Quality (RSRQ), Received Signal Strength Indicator (RSSI), CRI, and Channel Quality Indicator (CQI).

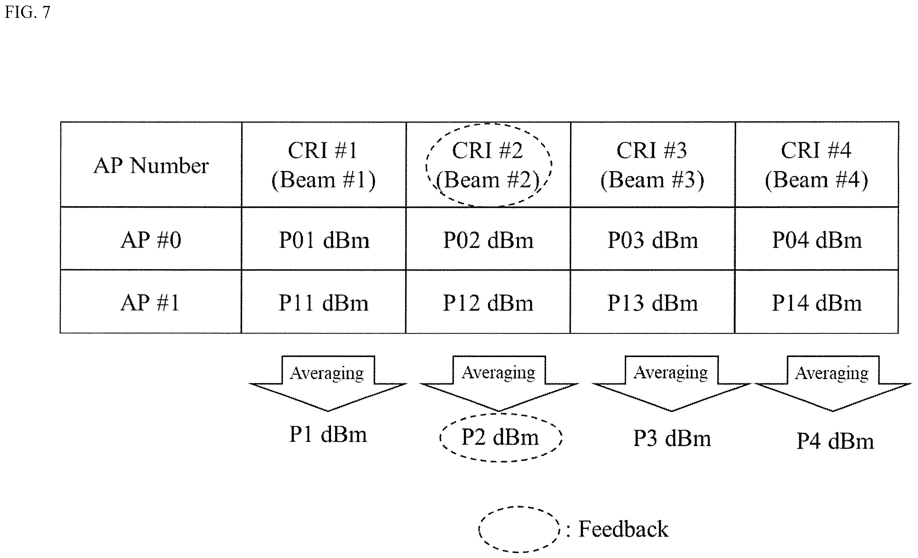

In one or more embodiments of the first example of the present invention, the RSRP value is a linear average of RSRP values calculated for each of the multiple CSI-RSs that are transmitted on the multiple APs. For example, as shown in Fig. 7, when the gNB 20 transmits the multiple CSI-RSs on APs #1-#4, the gNB 20 may calculate RSRP values ("P01 dBm" and "P11 dBm") in each of APs #0 and #1 for CRI #1 and then the gNB 20 may calculate P1 dBm which is a linear average of RSRP value of P01 dBm and P11 dBm. Similar to CRI #1, the gNB 20 may calculate RSRP values in each APs #0 and #1 for each CRIs #2, #3, and #4. Then, the gNB 20 may calculate P2 dBm, P3 dBm, and P4 dBm by averaging the RSRP values calculated in each APs #0 and #1 for each CRIs #2, #3, and #4, respectively. In one or more embodiments of the present invention, the RSRP value is calculated in wattage (in [W]).

The UE 10 may compare the averaged RSRP values "P1 dBm," "P2 dBm," "P3 dBm," and "P4 dBm" and determine one or more CRIs to be reported for CSI feedback based on the averaged RSRP values. For example, the UE 10 may determine one CRI having the largest averaged RSRP value may be selected. In an example of Fig. 7, when "P2 dBm" is the largest RSRP value, the UE 10 determines the CRI #2 to be reported for the CSI feedback. For example, the UE 10 may determine two or more CRIs which are the best-M RSRP values. Thus, the CRI may be determined based on the RSRP values for all the APs used for the CSI-RS transmission.

Turning back to Fig. 6, at step S13, the UE 10 may perform CSI reporting for CSI feedback. The CSI reporting may include at least one of the determined CRI(s) and the RSRP value(s) corresponding to the determined CRI(s).

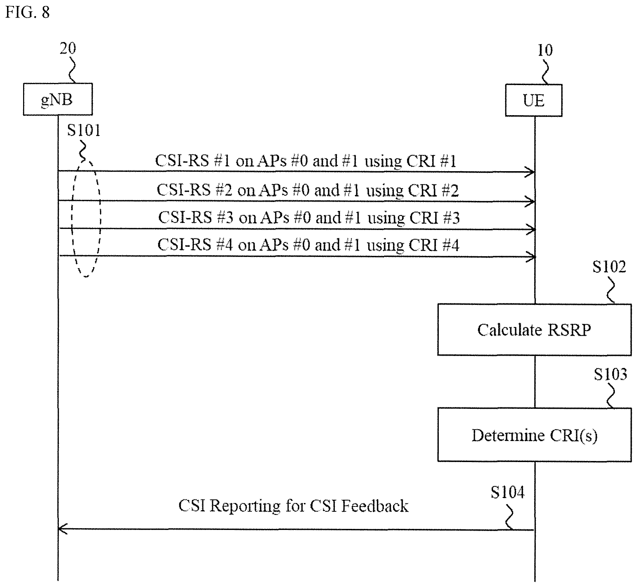

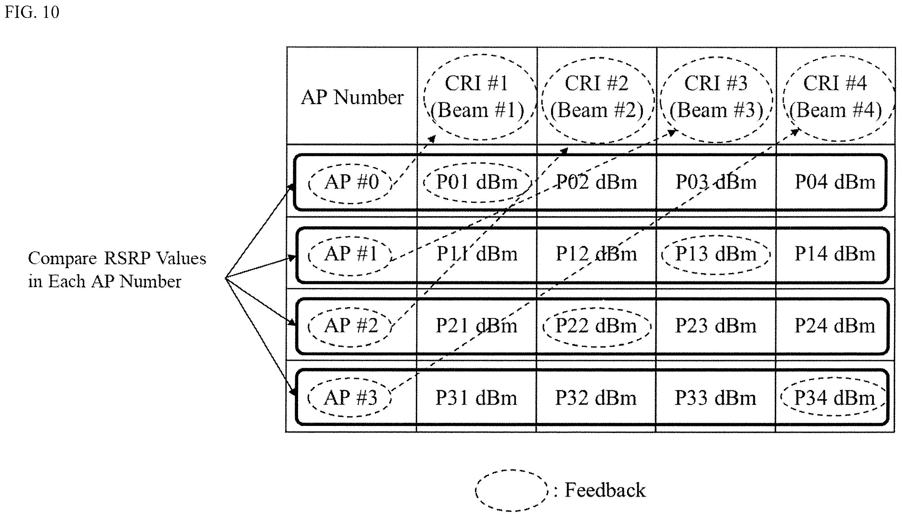

Fig. 8 is a sequence diagram showing an operation example of the beam management scheme according to one or more embodiments of the first example of the present invention. In an example of Fig. 10, the gNB 20 includes two APs (APs #0 and #1) and uses four CSI-RS resources (CRIs #1-#4) in the beam sweeping for the CSI-RS transmission. As above, the number of the APs used for the CSI-RS transmission may be two or more. Furthermore, the gNB 20 may use at least two CSI-RS resources in the beam sweeping.

As shown in Fig. 8, at step S101, the gNB 20 may transmit multiple CSI-RSs #1-4 on multiple APs #0 and #1 using CRIs #1-4.

Then, the UE 10 receives the multiple CSI-RSs #1-4. At step S102, the UE 10 may calculate the RSRP values in each of the CRIs #1-4. The RSRP values may be averages of RSRP values calculated in each of the multiple CSI-RSs transmitted on APs #0 and #1 for each CRIs #1-#4.

At step S103, the UE 10 may determine at least one CRI based on the calculated RSRP values.

At step S104, the UE 10 may perform the CSI reporting for CSI feedback to the gNB 20. The CSI reporting includes the determined CRI(s) and the RSRP value(s) corresponding to the determined CRI(s). Furthermore, the CSI reporting includes at least one of a Rank Indicator (RI), the CRI, a Precoding Matrix Indicator (PMI), a CQI, and the RSRP.

Thus, according to one or more embodiments of the first example of the present invention, the gNB 20 having multiple APs may transmit multiple first CSI-RSs on the multiple APs using a first CSI-RS resource and multiple second CSI-RSs on the multiple APs using a second CSI-RS resource. When the UE 10 receives the multiple first CSI-RSs and the multiple second CSI-RSs, the UE 10 may calculate a first RSRP value on the first CSI-RS resource and a second RSRP value on the second CSI-RS resource. The first RSRP value on the first CSI-RS resource may be an average of RSRP values calculated in each of the multiple first CSI-RSs. The second RSRP value on the second CSI-RS resource is an average of RSRP values calculated in each of the multiple second CSI-RSs. The UE 10 may determine at least one CSI-RS resource based on the first and second RSRP values. The UE 10 may report the determined CRI(s) and the RSRP value(s) corresponding to the determined CRI(s).

### (First Modified Example)

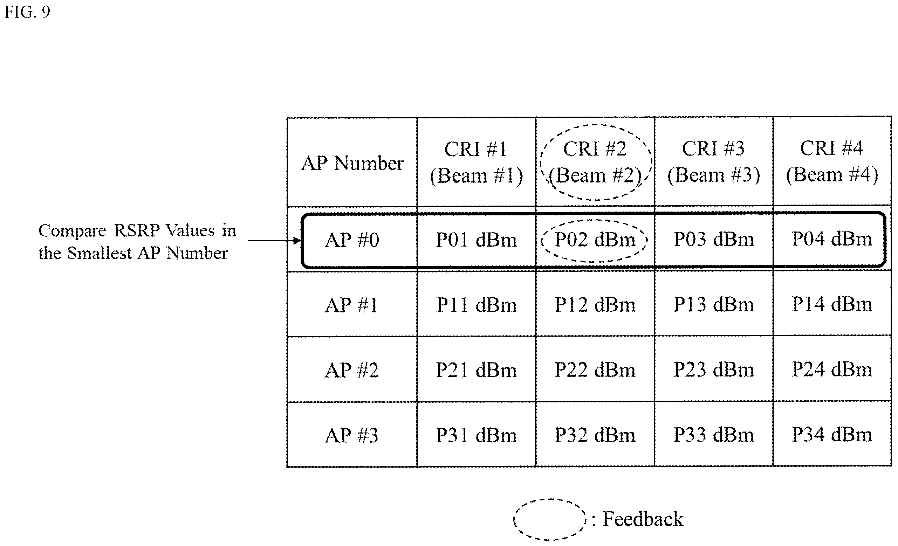

According to one or more embodiments of a first modified example of the present invention, as shown in Fig. 9, when the gNB 20 has four APs (APs #0-#3), the RSRP values for the limited AP, e.g., the smallest AP number (e.g., AP #0), may be compared. For example, when "P02 dBm" is the largest RSRP value, the CRI #2 (beam #2) for which the RSRP value is "P02 dBm" may be determined. In other words, the RSRP values for the APs #1-3 may be ignored in the CRI selection. The CSI reporting for CSI feedback may include the CRI #2 (beam #2) and "P02 dBm" for the CRI #2. Furthermore, the number of the APs used to compare the RSRP values is not limited to one. In one or more embodiments of the present invention, the number of the APs used to compare the RSRP values may be two or more. The number of APs or the AP index(es) can be informed by gNB. In this case, the metric values can be averaged across APs.

According to one or more embodiments of a first modified example of the present invention, the CRI may be determined in each AP number. For example, as shown in Fig. 10, the RSRP values may be compared in each of the APs #0-3. In an example of Fig. 10, when "P01 dBm" for AP #0, "P13 dBm" for AP #1, "P22 dBm" for AP #2, and "P34 dBm" for AP #3 may be the largest RSRP value in each AP number, the CRI #1 for AP #0, the CRI #3 for AP #1, the CRI #2 for AP #2, and the CRI 4 for AP #3 may be determined. For example, the feedback information may indicate the CRI #1 for AP #0, the CRI #3 for AP #1, the CRI #2 for AP #2, and the CRI 4 for AP #3. The CSI reporting for CSI feedback may further include the RSRP values corresponding to the selected CRI in each AP number. As another example, the AP number can be grouped together. For example, beam management is performed per group of AP, e.g., beam management using AP #0 and #1 and beam management using AP #2 and #3.

As another example of embodiments of the present invention, the RSRPs may be time-averaged and/or frequency-averaged. For example, the RSRPs may be averaged as a watt unit or a decibel (dBm) unit.

As another example of embodiments of the present invention, a reception weight (reception beam) may be applied to the metric calculation. For example, the reception weight may be determined based on information (e.g., quasi co-location, spatial quasi co-location and beam indication) from the gNB 20.

### (Second Example)

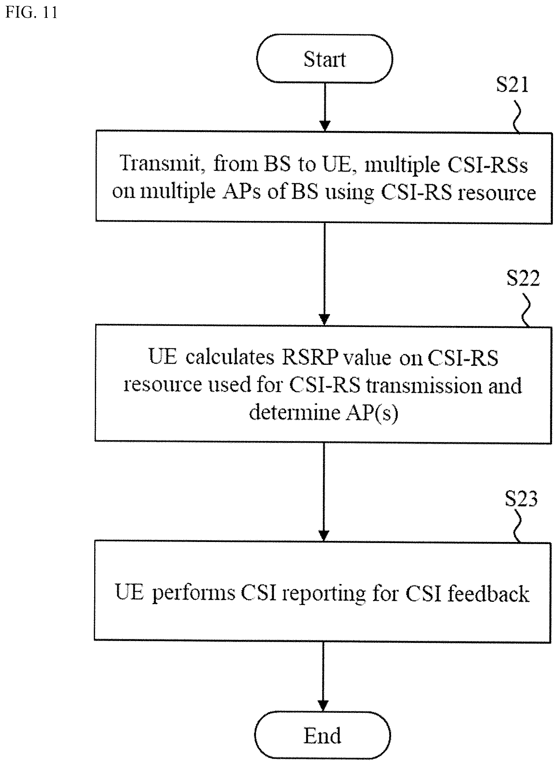

Fig. 11 is a flowchart diagram showing beam management and CSI acquisition according to one or more embodiments of a second example of the present invention. The beam management and the CSI acquisition may not be a single consecutive procedure. Steps S21 and S23 of Fig. 11 correspond to the steps S11 and S13 of Fig. 6.

As shown in Fig. 11, at step S22, the UE 10 may calculate RSRP based on the CSI-RSs transmitted on the multiple APs using the CSI-RS resources from the gNB 20. At step S12 in the beam management, the UE 10 may transmit feedback information including at least one of the determined AP(s) and the calculated metric for the selected AP(s) to the gNB 20.

At step S23, the UE 10 may perform CSI reporting for CSI feedback including the determined AP(s) to the gNB 20.

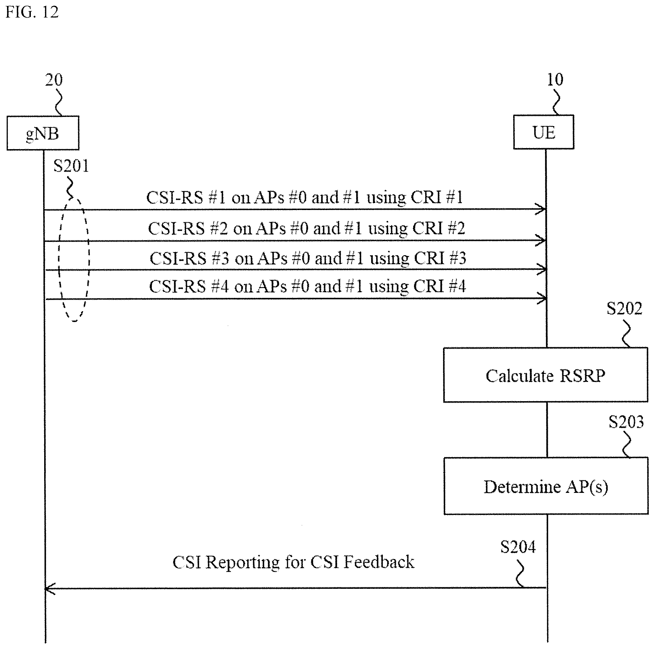

Fig. 12 is a sequence diagram showing an operation example of beam management scheme according to one or more embodiments of the second example of the present invention. Step S201 of Fig. 12 corresponds to the step S101 of Fig. 8. In an example of Fig. 12, the number of the APs of the gNB 20 may be four and the number of the beams (CSI-RS resources) in the beam sweeping may be four. As above, the number of the APs used for the CSI-RS transmission may be two or more. Furthermore, the gNB 20 may use at least two beams (CSI-RS resources) in the beam sweeping.

At step S202, the UE 10 may calculate an RSRP value of the multiple CSI-RSs #1-4 in each of the APs #0-#3. At step S203, the UE 10 may determine at least one AP from the APs #0-3.

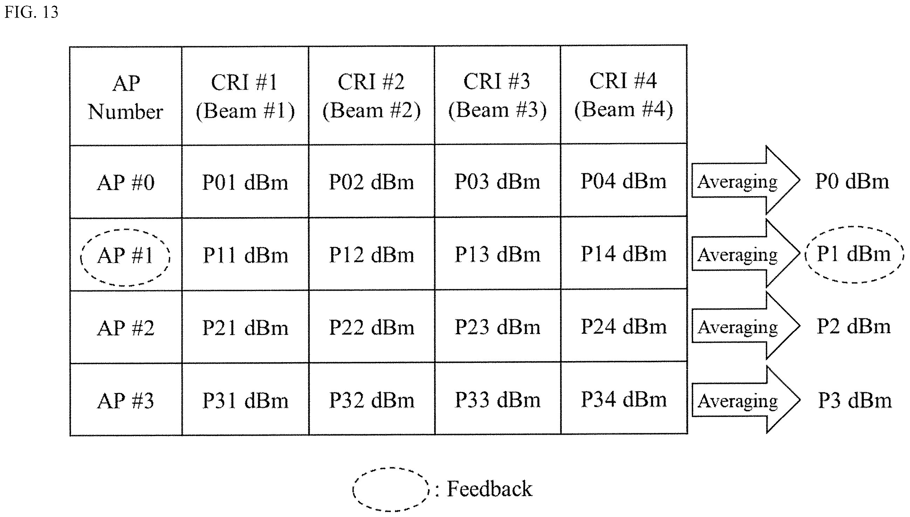

At the step S203, for example, the UE 10 may select part of the APs #0-3. For example, the UE 10 may determine one AP having the largest averaged RSRP value. For example, as shown in Fig. 13, RSRP values in each of the APs #0-3 may be averaged. Then, the averaged RSRPs (e.g., "P0 dBm," "P1 dBm," "P2 dBm," and "P3 dBm") may be compared and the AP having the largest averaged RSRP value may be selected. For example, when "P1 dBm" is the largest RSRP value, the AP #1 may be selected. The UE 10 may transmit the feedback information including the AP #1 and P1 dBm to the gNB 20.

Turning back to Fig. 12, at step S204, the UE 10 may perform CSI reporting for CSI feedback information indicating the determined AP and the RSRP value for the determined AP.

### (Third Example)

According to one or more embodiments of a third example of the present invention, the UE 10 may use a port (a resource) selection/combination codebook for beam management. The UE 10 may report, to the gNB 20, the metric (e.g., RSRP) together with an index of the codebook (PMI). For example, the codebook for 2-port (2-resource) CSI-RS can be one of the followings:
- [1,0], [0,1]
- sqrt(2)[1, 0], sqrt(2)[0, 1]
- 1/sqrt(2)[1, 1], 1/sqrt(2)[1, j], 1/sqrt(2)[1,-1], 1/sqrt(2)[1, -j]
- [1,0], [0, 1], 1/sqrt(2)[1, 1], 1/sqrt(2)[1, j], 1/sqrt(2)[1, -1], 1/sqrt(2)[1, -j]

The intension is that some co-phase information is already provided.

The gNB 20 may use the codebook subset restriction (CSR) mechanism to restrict part of the codebooks for derivation by the UE 10.

### (Fourth Example)

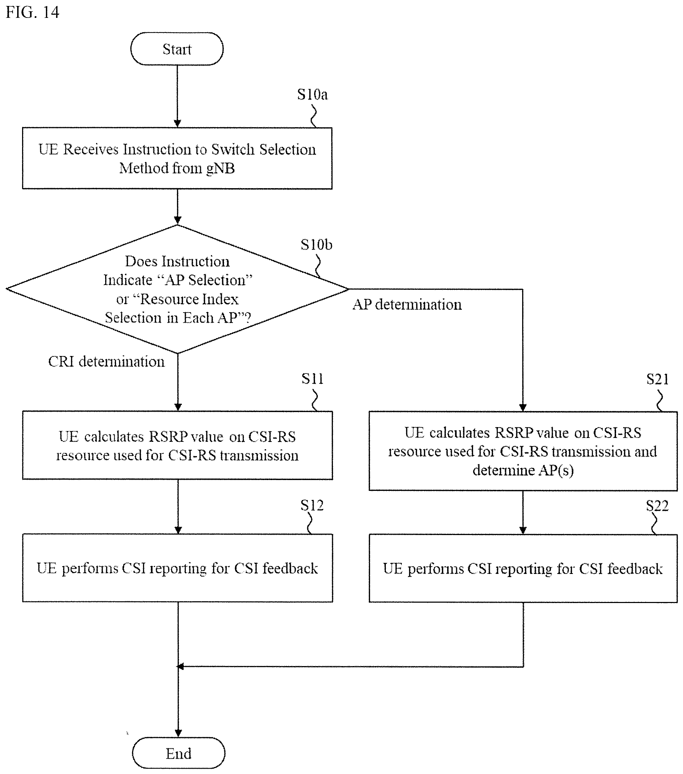

According to one or more embodiments of a fourth example of the present invention, the beam management method according to one or embodiments of the first and the second examples of the present invention may be switched dynamically or semi-statically. Fig. 14 is an example flowchart diagram showing beam management and CSI acquisition schemes according to one or more embodiments of the fourth example of the present invention. Similar steps in Fig. 14 to steps in Figs. 6 and 11 may have the same reference labels.

As shown in Fig. 14, at step S10a, the UE 10 may receive an instruction to switch the selection method from the gNB 20. The instruction may be transmitted as Downlink Control Information (DCI) and a Radio Resource Control (RRC) signaling.

Then, at step S10b, when the instruction indicates the "AP determination" method, the step S21 may be performed. On the other hand, when the instruction indicates the "CRI determination" method, the step S11 may be performed.

Thus, according to one or more embodiments of the fourth example of the present invention, the two types of the beam management methods can be switched. The method can be switched between different selection method in first example and/or second example.

In the examples above, we mainly show examples for gNB Tx beam management. However, such examples can be also applicable for UE Rx beam management.

### (Configuration of gNB)

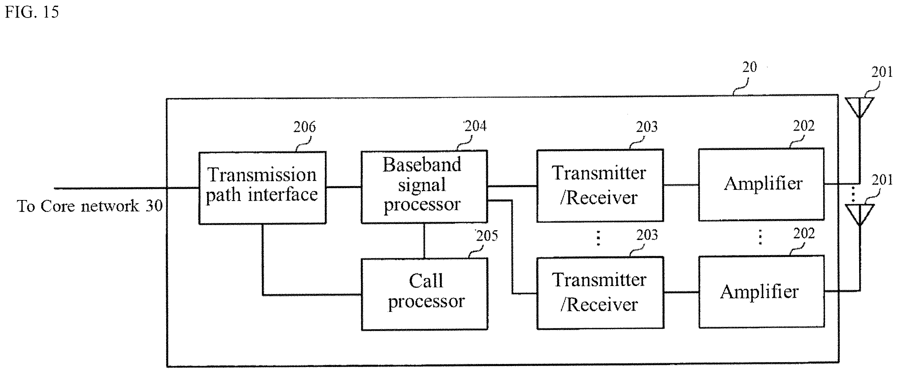

The gNB 20 according to one or more embodiments of the present invention will be described below with reference to Fig. 15. Fig. 15 is a diagram illustrating a schematic configuration of the gNB 20 according to one or more embodiments of the present invention. The gNB 20 may include a plurality of antennas (antenna element group) 201, amplifier 202, transceiver (transmitter/receiver) 203, a baseband signal processor 204, a call processor 205 and a transmission path interface 206.

User data that is transmitted on the DL from the gNB 20 to the UE 20 is input from the core network 30, through the transmission path interface 206, into the baseband signal processor 204.

In the baseband signal processor 204, signals are subjected to Packet Data Convergence Protocol (PDCP) layer processing, Radio Link Control (RLC) layer transmission processing such as division and coupling of user data and RLC retransmission control transmission processing, Medium Access Control (MAC) retransmission control, including, for example, HARQ transmission processing, scheduling, transport format selection, channel coding, inverse fast Fourier transform (IFFT) processing, and precoding processing. Then, the resultant signals are transferred to each transceiver 203. As for signals of the DL control channel, transmission processing is performed, including channel coding and inverse fast Fourier transform, and the resultant signals are transmitted to each transceiver 203.

The baseband signal processor 204 notifies each UE 10 of control information (system information) for communication in the cell by higher layer signaling (e.g., Radio Resource Control (RRC) signaling and broadcast channel). Information for communication in the cell includes, for example, UL or DL system bandwidth.

In each transceiver 203, baseband signals that are precoded per antenna and output from the baseband signal processor 204 are subjected to frequency conversion processing into a radio frequency band. The amplifier 202 amplifies the radio frequency signals having been subjected to frequency conversion, and the resultant signals are transmitted from the antennas 201.

As for data to be transmitted on the UL from the UE 10 to the gNB 20, radio frequency signals are received in each antenna 201, amplified in the amplifier 202, subjected to frequency conversion and converted into baseband signals in the transceiver 203, and are input to the baseband signal processor 204.

The baseband signal processor 204 performs FFT processing, IDFT processing, error correction decoding, MAC retransmission control reception processing, and RLC layer and PDCP layer reception processing on the user data included in the received baseband signals. Then, the resultant signals are transferred to the core network 30 through the transmission path interface 206. The call processor 205 performs call processing such as setting up and releasing a communication channel, manages the state of the gNB 20, and manages the radio resources.

### (Configuration of User Equipment)

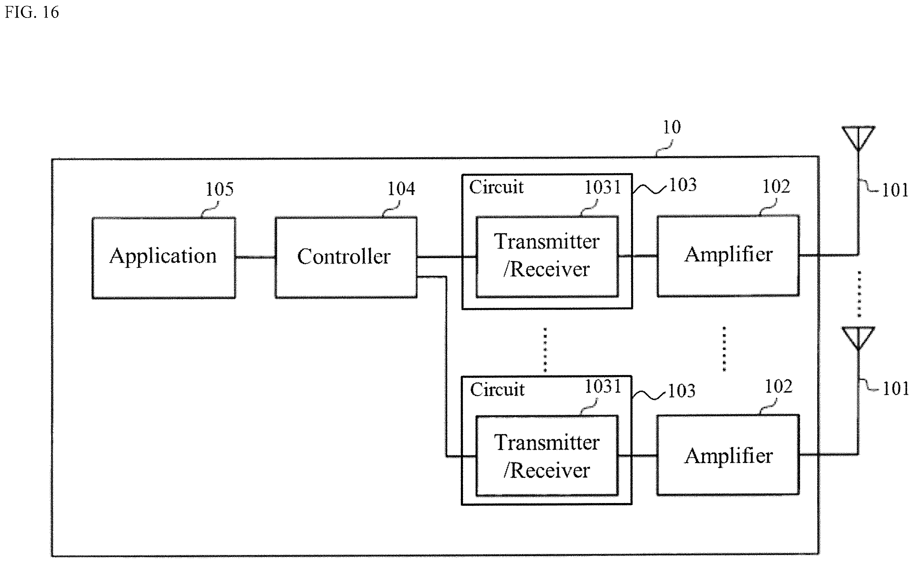

The UE 10 according to one or more embodiments of the present invention will be described below with reference to Fig. 16. Fig. 16 is a schematic configuration of the UE 10 according to one or more embodiments of the present invention. The UE 10 has a plurality of UE antenna S101, amplifiers 102, the circuit 103 comprising transceiver (transmitter/receiver) 1031, the controller 104, and an application 105.

As for DL, radio frequency signals received in the UE antenna S101 are amplified in the respective amplifiers 102, and subjected to frequency conversion into baseband signals in the transceiver 1031. These baseband signals are subjected to reception processing such as FFT processing, error correction decoding and retransmission control and so on, in the controller 104. The DL user data is transferred to the application 105. The application 105 performs processing related to higher layers above the physical layer and the MAC layer. In the downlink data, broadcast information is also transferred to the application 105.

On the other hand, UL user data is input from the application 105 to the controller 104. In the controller 104, retransmission control (Hybrid ARQ) transmission processing, channel coding, precoding, DFT processing, IFFT processing and so on are performed, and the resultant signals are transferred to each transceiver 1031. In the transceiver 1031, the baseband signals output from the controller 104 are converted into a radio frequency band. After that, the frequency-converted radio frequency signals are amplified in the amplifier 102, and then, transmitted from the antenna 101.

One or more embodiments of the present invention may be applied to the uplink, downlink, transmission, and reception, although examples above mainly focus on downlink beam management. If it is applied to uplink beam management, the downlink RS can be taken over by uplink RS. Similarly, UE feedback can be taken over by gNB signaling.

One or more embodiments of the present invention may be applied to the Rx beam management. For instance, UE Rx beam selection can be performed by either of Examples 1, 2 or 3.

Although the present disclosure mainly described examples of a channel and signaling scheme based on NR, the present invention is not limited thereto. One or more embodiments of the present invention may apply to another channel and signaling scheme having the same functions as NR such as LTE/LTE-A and a newly defined channel and signaling scheme.

Although the present disclosure mainly described examples of technologies related to channel estimation and CSI feedback schemes based on the CSI-RS, the present invention is not limited thereto. One or more embodiments of the present invention may apply to another synchronization signal, reference signal, and physical channel such as a Sounding Reference Signal (SRS), Primary Synchronization Signal/Secondary Synchronization Signal (PSS/SSS), Demodulation Reference Signal (DM-RS), Physical Broadcast Channel (PBCH), and Physical Random Access Channel (PRACH).

Although the present disclosure described examples of various signaling methods, the signaling according to one or more embodiments of the present invention may be explicitly or implicitly performed.

Although the present disclosure mainly described examples of various signaling methods, the signaling according to one or more embodiments of the present invention may be higher layer signaling such as RRC signaling and/or lower layer signaling such as Down Link Control Information (DCI) and Media Access Control Control Element (MAC CE). Furthermore, the signaling according to one or more embodiments of the present invention may use a Master Information Block (MIB) and/or a System Information Block (SIB). For example, at least two of the RRC, the DCI, and the MAC CE may be used in combination as the signaling according to one or more embodiments of the present invention.

Whether the physical signal/channel is beamformed may be transparent for the UE. The beamformed RS and the beamformed signal may be called the RS and the signal, respectively. Furthermore, the beamformed RS may be referred to as a RS resource. Furthermore, the beam selection may be referred to as resource selection. Furthermore, the Beam Index may be referred to as a resource index (indicator) or an antenna port index. The present invention may be applied to CSI acquisition, channel sounding, beam management, and other beam control schemes.

The above examples and modified examples may be combined with each other, and various features of these examples can be combined with each other in various combinations.

Although the disclosure has been described with respect to only a limited number of embodiments, those skilled in the art, having benefit of this disclosure, will appreciate that various other embodiments may be devised without departing from the scope of the present invention. Accordingly, the scope of the invention should be limited only by the attached claims.

## Claims

1. A radio communication method comprising:
transmitting, from a base station (20), BS, multiple first Channel State Information Reference Signals, CSI-RSs, using multiple APs on a first CSI-RS resource, and multiple second CSI-RSs using multiple APs on a second CSI-RS resource;
receiving, with a user equipment (10), UE, the multiple first CSI-RSs and the multiple second CSI-RSs;
calculating, with the UE (10), a first Reference Signal Received Power, RSRP value on the first CSI-RS resource and a second RSRP value on the second CSI-RS resource;
determining, with the UE (10), a CSI-RS resource from the first CSI-RS resource and the second CSI-RS resource, based on the first RSRP value and the second RSRP value; and
reporting, with the UE (10), at least one of a CSI Resource Indicator, CRI, indicating the determined CSI-RS resource, and a RSRP value of the determined CSI-RS resource.

2. A user equipment (10), UE, comprising:
a receiver (103) that receives multiple first Channel State Information Reference Signals, CSI-RSs, transmitted by using multiple antenna ports, APs, on a first CSI-RS resource and multiple second CSI-RSs transmitted by using multiple APs on a second CSI-RS resource;
a processor that calculates a first Reference Signal Received Power, RSRP, value on the first CSI-RS resource and a second RSRP value on the second CSI-RS resource; and
a transmitter (103) that transmits at least one of the first RSRP value, the second RSRP value, a first CSI resource indicator, CRI, indicating the first CSI-RS resource, and a second CRI indicating the second CSI-RS resource,
wherein the processor determines a CSI-RS resource from the first CSI-RS resource and the second CSI-RS resource, based on the first RSRP value and the second RSRP value; and
wherein the transmitter (103) transmits at least one of a CRI indicating the determined CSI-RS resource, and a RSRP value of the determined CSI-RS resource.

3. The UE (10) according to claim 2, wherein the first RSRP value is an average of RSRP values calculated for each of the multiple first CSI-RSs, the second RSRP value is an average of RSRP values calculated for each of the multiple second CSI-RSs.

4. A base station (20), BS, comprising:
a transmitter that transmits multiple first Channel State Information Reference Signals, CSI-RSs, using multiple antenna ports, APs, on a first CSI-RS resource and multiple second CSI-RSs using multiple APs on a second CSI-RS resource; and
a receiver that receives at least one of a CSI Resource Indicator, CRI, indicating a CSI-RS resource determined based on a first Reference Signal Received Power, RSRP, value calculated on the first CSI-RS resource and a second RSRP value calculated on the second CSI-RS resource, and a RSRP value of the determined CSI-RS resource.

## Patentansprüche

1. Funkkommunikationsverfahren, umfassend:
Übertragen mehrerer erster Kanalzustandsinformations-Referenzsignale, Channel State Information Reference Signals, CSI-RS, unter Verwendung mehrerer APs auf einer ersten CSI-RS-Ressource, und mehrerer zweiter CSI-RS unter Verwendung mehrerer APs auf einer zweiten CSI-RS-Ressource, von einer Basisstation, BS, (20);
Empfangen der mehreren ersten CSI-RS und der mehreren zweiten CSI-RS mit einer Benutzerausrüstung, User Equipment, UE, (10);
Berechnen eines ersten Referenzsignal-Empfangsleistungs-, Reference Signal Received Power, RSRP, Werts an der ersten CSI-RS-Ressource, und eines zweiten RSRP-Werts an der zweiten CSI-RS-Ressource mit der UE (10);
Bestimmen einer CSI-RS-Ressource aus der ersten CSI-RS-Ressource und der zweiten CSI-RS-Ressource auf Basis des ersten RSRP-Werts und des zweiten RSRP-Werts mit der UE (10); und
Melden mindestens eines aus einem CSI-Ressourcenindikator, CRI, der die bestimmte CSI-RS-Ressource anzeigt, und einem RSRP-Wert der bestimmten CSI-RS-Ressource, mit der UE (10).

2. Benutzerausrüstung, UE, (10), umfassend:
einen Empfänger (103), der mehrere erste Kanalzustandsinformations-Referenzsignale, CSI-RS, die unter Verwendung mehrerer Antennenanschlüsse, Antenna Ports, APs, auf einer ersten CSI-RS-Ressource übertragen werden, und mehrere zweite CSI-RSs, die unter Verwendung mehrerer APs auf einer zweiten CSI-RS-Ressource übertragen werden, empfängt;
einen Prozessor, der einen ersten Referenzsignal-Empfangsleistungs-, RSRP, Wert auf der ersten CSI-RS-Ressource, und einen zweiten RSRP-Wert auf der zweiten CSI-RS-Ressource berechnet; und
einen Transmitter (103), der mindestens eines aus dem ersten RSRP-Wert, dem zweiten RSRP-Wert, einem ersten CSI-Ressourcenindikator, CRI, der die erste CSI-RS-Ressource anzeigt, und einem zweiten CRI, der die zweite CSI-RS-Ressource anzeigt, überträgt,
wobei der Prozessor auf Basis des ersten RSRP-Werts und des zweiten RSRP-Werts eine CSI-RS-Ressource aus der ersten CSI-RS-Ressource und der zweiten CSI-RS-Ressource bestimmt; und
wobei der Transmitter (103) mindestens eines aus einem CRI, der die bestimmte CSI-RS-Ressource anzeigt, und einem RSRP-Wert der bestimmten CSI-RS-Ressource überträgt.

3. UE (10) nach Anspruch 2, wobei es sich bei dem ersten RSRP-Wert um einen Durchschnitt von RSRP-Werten handelt, die für jedes der mehreren ersten CSI-RS berechnet wurden, wobei es sich bei dem zweiten RSRP-Wert um einen Durchschnitt von RSRP-Werten handelt, die für jedes der mehreren zweiten CSI-RS berechnet wurden.

4. Basisstation, BS, (20), umfassend:
einen Transmitter, der mehrere erste Kanalzustandsinformations-Referenzsignale, CSI-RS, unter Verwendung mehrerer Antennenanschlüsse, APs, auf einer ersten CSI-RS-Ressource, und mehrere zweite CSI-RS unter Verwendung mehrerer APs auf einer zweiten CSI-RS-Ressource überträgt; und
einen Empfänger, der mindestens eines aus einem CSI-Ressourcenindikator, CRI, der eine CSI-RS-Ressource anzeigt, welche auf Basis eines auf der ersten CSI-RS-Ressource berechneten ersten Referenzsignal-Empfangsleistungs-, RSRP, Werts, und eines auf der zweiten CSI-RS-Ressource berechneten zweiten RSRP-Werts bestimmt wurde, und einem RSRP-Wert der bestimmten CSI-RS-Ressource empfängt.

## Revendications

1. Procédé de communication radio comprenant :
la transmission, depuis une station de base (20), BS, de multiples premiers signaux de référence d'informations d'état de canal, CSI-RS, à l'aide de multiples ports AP sur une première ressource de signal CSI-RS et de multiples seconds signaux CSI-RS à l'aide de multiples ports AP sur une seconde ressource de signal CSI-RS ;
la réception, avec un équipement d'utilisateur (10), UE, des multiples premiers signaux CSI-RS et des multiples seconds signaux CSI-RS ;
le calcul, avec l'UE (10), d'une première valeur de puissance reçue de signal de référence, RSRP, sur la première ressource de signal CSI-RS et une seconde valeur de puissance RSRP sur la seconde ressource de signal CSI-RS ;
la détermination, avec l'UE (10), d'une ressource de signal CSI-RS parmi la première ressource de signal CSI-RS et la seconde ressource de signal CSI-RS, sur la base de la première valeur de puissance RSRP et de la seconde valeur de puissance RSRP ; et
le rapport, avec l'UE (10), d'au moins l'un d'un indicateur de ressource d'informations CSI, CRI, indiquant la ressource de signal CSI-RS déterminée et d'une valeur de puissance RSRP de la ressource de signal CSI-RS déterminée.

2. Équipement utilisateur (10), UE, comprenant :
un récepteur (103) qui reçoit de multiples premiers signaux de référence d'informations d'état de canal, CSI-RS, transmis en utilisant de multiples ports d'antenne, AP, sur une première ressource de signal CSI-RS et de multiples seconds signaux CSI-RS transmis en utilisant de multiples ports AP sur une seconde ressource de signal CSI-RS ;
un processeur qui calcule une première valeur de puissance reçue de signal de référence, RSRP, sur la première ressource de signal CSI-RS et une seconde valeur de puissance RSRP sur la seconde ressource de signal CSI-RS ; et
un émetteur (103) qui transmet au moins l'un de la première valeur de puissance RSRP, de la seconde valeur de puissance RSRP, d'un premier indicateur de ressources d'informations CSI, CRI, indiquant la première ressource de signal CSI-RS, et d'un second indicateur CRI indiquant la seconde ressource de signal CSI-RS,
dans lequel le processeur détermine une ressource de signal CSI-RS parmi la première ressource de signal CSI-RS et la seconde ressource de signal CSI-RS, sur la base de la première valeur de puissance RSRP et de la seconde valeur de puissance RSRP ; et
dans lequel l'émetteur (103) transmet au moins l'un d'un indicateur CRI indiquant la ressource de signal CSI-RS déterminée, et d'une valeur de puissance RSRP de la ressource de signal CSI-RS déterminée.

3. Équipement UE (10) selon la revendication 2, dans lequel la première valeur de puissance RSRP est une moyenne de valeurs de puissance RSRP calculées pour chacun des multiples premiers signaux CSI-RS, la seconde valeur de puissance RSRP est une moyenne de valeurs de puissance RSRP calculées pour chacun des multiples seconds signaux CSI-RS.

4. Station de base (20), BS, comprenant :
un émetteur qui transmet de multiples premiers signaux de référence d'informations d'état de canal, CSI-RS, à l'aide de multiples ports d'antenne, AP, sur une première ressource de signal CSI-RS et de multiples seconds signaux CSI-RS à l'aide de multiples ports AP sur une seconde ressource de signal CSI-RS ; et
un récepteur qui reçoit au moins l'un d'un indicateur de ressources d'informations CSI, CRI, indiquant une ressource de signal CSI-RS déterminée sur la base d'une première valeur de puissance reçue de signal de référence, RSRP, calculée sur la première ressource de signal CSI-RS et d'une seconde valeur de puissance RSRP calculée sur la seconde ressource de signal CSI-RS et une valeur de puissance RSRP de la ressource de signal CSI-RS déterminée.
